# EUROPEAN PATENT SPECIFICATION

(11) **EP 3 922 432 B1**
(45) Date of publication and mention of the grant of the patent: **21.08.2024**
(21) Application number: 21169428.6
(22) Date of filing: 20.04.2021
(51) Int. Cl.: B29C 48/88, B29C 48/355, B29C 48/92, B29C 48/00, B29C 48/07

(54) **APPARATUS AND METHOD FOR PRODUCING SHEET-SHAPED RUBBER MATERIAL**
VORRICHTUNG UND VERFAHREN ZUR HERSTELLUNG VON BLATTFÖRMIGEM GUMMIMATERIAL
APPAREIL ET PROCÉDÉ DE PRODUCTION DE MATÉRIAU DE CAOUTCHOUC EN FORME DE FEUILLE

(30) Priority: 09.06.2020 JP 2020100338
(43) Date of publication of application: 15.12.2021
(73) Proprietor: Sumitomo Rubber Industries, Ltd., Kobe-shi, Hyogo-ken 651-0072 (JP)
(72) Inventor: KURODA, Kohei, Kobe-shi, 651-0072 (JP)
(74) Representative: Manitz Finsterwald Patent- und Rechtsanwaltspartnerschaft mbB

(56) References cited:
- JP-A- 2018 062 077
- JP-A- 2019 084 737
- JP-A- H07 214 642
- JP-A- H09 187 858
- KR-A- 20050 044 781
- US-A- 2 726 922
- US-A- 4 088 721
- US-A- 4 097 566

## Description

### BACKGROUND OF THE INVENTION

### Field of the Invention

The present invention relates to an apparatus and method for producing a sheet-shaped rubber material.

### Description of the Background Art

Japanese Laid-Open Patent Publication No. H6-182854 discloses an extruded rubber weight control method for maintaining, at a predetermined value, the weight per unit length of an unvulcanized rubber extruded by an extruder. In that weight control method, the unvulcanized rubber is placed and conveyed on a drawing conveyor located at the exit of the extruder, and the linear speed of the drawing conveyor is increased or decreased based on a deviation between the weight of the unvulcanized rubber placed on the drawing conveyor and a predetermined reference value.

The above-mentioned unvulcanized rubber has a relatively high temperature immediately after being extruded by the extruder, and is then cooled and shrinks while the rubber is being transported by the drawing conveyor. Therefore, the weight per unit length of the unvulcanized rubber significantly changes before and after the shrinkage. Meanwhile, in the above-mentioned weight control method, such shrinkage is not taken into consideration, and therefore, there is room for improvement in production with the weight per unit length of the unvulcanized rubber maintained at a predetermined value.
US 4 097 566 A discloses a production apparatus comprising the features according to the preamble of claim 1 and a method comprising the features of the preamble of claim 9.
US 4 088 721 A discloses a production apparatus and a method comprising features according to a related technology.

The present invention has been made in view of the above circumstances, and a main object of the present invention is to provide an apparatus and method capable of producing a sheet-shaped rubber material having a desired weight with higher accuracy.

### SUMMARY OF THE INVENTION

The present invention is directed to a production apparatus for producing an unvulcanized sheet-shaped rubber material, including: an extruder configured to continuously extrude the rubber material; a receiving conveyor configured to receive the rubber material extruded from the extruder and transport the rubber material downstream in a transport direction, and having an adjustable transport speed; a first weight measuring instrument located downstream of the extruder in the transport direction and configured to measure a weight per unit length of the rubber material being transported; a first cooler configured to cool the rubber material that has been measured by the first weight measuring instrument; a second weight measuring instrument configured to measure the weight per unit length of the rubber material that has been cooled by the first cooler; and a controller configured to control the transport speed of the receiving conveyor based on the weights per unit length of the rubber material that have been measured by the first weight measuring instrument and the second weight measuring instrument.

The sheet-shaped rubber material production apparatus according to the present invention further includes a second cooler configured to cool the rubber material that has been measured by the second weight measuring instrument.

In the sheet-shaped rubber material production apparatus according to the present invention, the first cooler preferably cools the rubber material to a temperature of 60 to 80°C.

In the sheet-shaped rubber material production apparatus according to the present invention, the first cooler preferably cools the rubber material by pouring a liquid onto the rubber material.

In the sheet-shaped rubber material production apparatus according to the present invention, the liquid is preferably water.

The sheet-shaped rubber material production apparatus according to the present invention preferably further includes a transport conveyor configured to transport the rubber material that has been cooled by the first cooler downstream in the transport direction. The transport conveyor preferably includes an inclined section upwardly inclined downstream in the transport direction, and the second weight measuring instrument is preferably located downstream of the inclined section in the transport direction.

The sheet-shaped rubber material production apparatus according to the present invention preferably further includes a cutter configured to cut the rubber material that has been cooled by the second cooler into a predetermined length.

The sheet-shaped rubber material production apparatus according to the present invention preferably further includes a third weight measuring instrument configured to measure a weight of the rubber material that has been cut by the cutter.

In the sheet-shaped rubber material production apparatus according to the present invention, the second weight measuring instrument is preferably located at a distance that is 15 to 35% of the length of a path between the extruder and the third weight measuring instrument, downstream from the extruder in the transport direction.

The present invention is directed to a production method for producing an unvulcanized sheet-shaped rubber material, including: a step of continuously extruding the rubber material from an extruder; a step of receiving the rubber material extruded from the extruder and transporting the rubber material downstream in a transport direction, by using a receiving conveyor; a first measuring step of measuring a weight per unit length of the rubber material being transported by the receiving conveyor; a first cooling step of cooling the rubber material that has been measured in the first measuring step; a second measuring step of measuring the weight per unit length of the rubber material that has been cooled in the cooling step; and a step of controlling a transport speed of the receiving conveyor based on the weights per unit length of the rubber material that have been measured in the first measuring step and the second measuring step. The method further includes a second cooling step of cooling the rubber material that has been measured in the second measuring step.

According to the present invention thus configured, a sheet-shaped rubber material having a desired weight can be produced with higher accuracy.

### BRIEF DESCRIPTION OF THE DRAWINGS

FIG. 1 is a conceptual side view illustrating a production apparatus according to an embodiment of the present invention; and
FIG. 2 is a flowchart of a production method according to an embodiment of the present invention.

### DESCRIPTION OF THE PREFERRED EMBODIMENTS

An embodiment of the present invention will now be described with reference to the accompanying drawings.

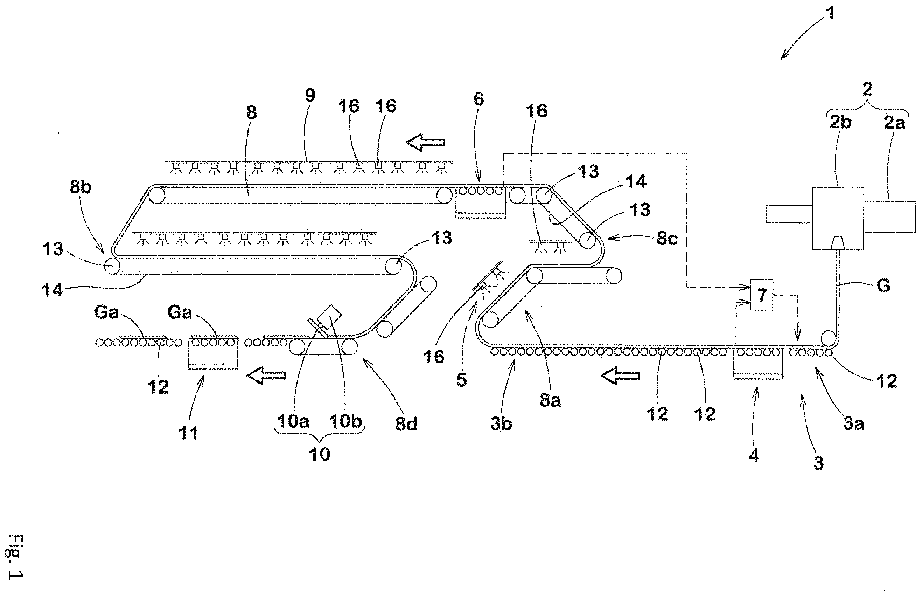

FIG. 1 is a conceptual side view illustrating a production apparatus 1 for a sheet-shaped rubber material (hereinafter, also referred to simply as an "apparatus") according to an embodiment of the present invention. The apparatus 1 of this embodiment is for producing an unvulcanized sheet-shaped rubber material G. The rubber material G produced by the apparatus 1 is, for example, suitably used as a tread rubber that is a constituent member for tires. The term "unvulcanized" is intended to encompass any state in which vulcanization is not completed, including a so-called half-vulcanized state. The term "sheet-shaped" is intended to encompass both a shape of the rubber material G having a thickness and width that are uniform in the transport direction and a shape of the rubber material G having a thickness and width that vary in the transport direction. Note that the rubber material G of the present invention is not limited to a rubber material that is used as a constituent member for tires.

As shown in FIG. 1, the apparatus 1 of this embodiment includes an extruder 2, a receiving conveyor 3, a first weight measuring instrument 4, a first cooler 5, a second weight measuring instrument 6, and a controller 7. The apparatus 1 further includes, for example, a transport conveyor 8, a second cooler 9, a cutter 10, and a third weight measuring instrument 11. Note that in FIG. 1, the up-down direction indicates a vertical direction, and the right-left direction indicates a horizontal direction.

The extruder 2 of this embodiment has a function of continuously extruding the rubber material G into a sheet shape. As the extruder 2, for example, one having a well-known structure is employed which includes a body section 2a including a screw (not shown) for kneading the rubber material G, and an extrusion head 2b including an extrusion die (not shown) for forming the rubber material G into a sheet shape. In this embodiment, the rate at which the extruder 2 extrudes the rubber material G is adjustable.

The length in a transport direction of the rubber material G extruded from the extruder 2 is, but not limited to, not less than 120 m. The width and the thickness of the rubber material G are 120 to 350 mm and 5 to 15 mm, respectively.

The receiving conveyor 3 of this embodiment has a function of receiving the rubber material G extruded from the extruder 2, and transporting the rubber material G downstream in a transport direction. The "transport direction" refers to the direction in which the receiving conveyor 3 and the transport conveyor 8 transport the rubber material G. In FIG. 1, the downstream transport direction is indicated by an arrow head.

For example, the receiving conveyor 3 is composed of a roller conveyer having a well-known structure in which a plurality of rollers 12 are arranged in the transport direction. In this embodiment, the rollers 12 are driven by an electric motor (not shown), and have an adjustable transport speed. Note that the receiving conveyor 3 is not limited to such an embodiment.

For example, the receiving conveyor 3 includes an upstream section 3a, and a downstream section 3b located downstream of the upstream section 3a in the transport direction. For example, the upstream section 3a is formed so as to be shorter than the downstream section 3b in the transport direction. For example, the upstream section 3a and the downstream section 3b both include rollers 12.

The transport conveyor 8 of this embodiment is located downstream of the receiving conveyor 3 in the transport direction. After being transported by the receiving conveyor 3, the rubber material G is transported by the transport conveyor 8.

For example, the transport conveyor 8 includes a first section 8a, a second section 8b, an inclined section 8c, and a cutting section 8d. The first section 8a of this embodiment is located adjacent to the receiving conveyor 3, and can transport the rubber material G that is being cooled by the first cooler 5. The second section 8b of this embodiment can transport the rubber material G that is being cooled by the second cooler 9. The inclined section 8c of this embodiment is upwardly inclined downstream in the transport direction. The inclined section 8c of this embodiment is located between the first section 8a and the second section 8b in the transport direction. The cutting section 8d of this embodiment, above which the cutter 10 is located, receives the rubber material G that is to be cut by the cutter 10.

The transport conveyor 8 is configured as a belt conveyor having a well-known structure that includes a plurality of guide rollers 13, and non-stretchable transport belts 14 that are looped around the respective guide rollers 13 such that the transport belts 14 are able to circulate. In this embodiment, the first section 8a, the second section 8b, the inclined section 8c, and the cutting section 8d are each configured as a belt conveyor. The rubber material G is transported on the transport belts 14.

The first and second weight measuring instruments 4 and 6 of this embodiment each have a function of measuring a weight per unit length (hereinafter, also referred to simply as a "unit-length weight") of the rubber material G. For example, the first and second weight measuring instruments 4 and 6 are each preferably a measuring instrument with rollers having a well-known structure. In such an embodiment, the unit-length weight of the rubber material G can be measured without stopping the transportation of the rubber material G. The first and second weight measuring instruments 4 and 6 may, for example, perform the measurement of the unit-length weight continuously or at predetermined intervals, e.g., once per several seconds. The first and second weight measuring instruments 4 and 6 preferably convert the result of the measurement into a signal, e.g., an electrical signal d, and output the signal to the controller 7.

In this embodiment, the first weight measuring instrument 4 is located downstream of the extruder 2 in the transport direction. The first weight measuring instrument 4 is, for example, located between the upstream section 3a and the downstream section 3b. The first weight measuring instrument 4 thus located measures the unit-length weight of the rubber material G that has been extruded by the extruder 2 and has a relatively high temperature.

The first and second coolers 5 and 9 of this embodiment each have a function of cooling the rubber material G. Therefore, the shrinkage of the rubber material G is accelerated. The first and second coolers 5 and 9 of this embodiment cool the rubber material G by pouring a liquid, e.g., water onto the rubber material G . In this embodiment, the first and second coolers 5 and 9 each include a watering head 16 having a well-known structure capable of pouring water. The first and second coolers 5 and 9 each include a plurality of watering heads 16 arranged in the transport direction of the rubber material G.

In this embodiment, the first cooler 5 is located downstream of the first weight measuring instrument 4 in the transport direction. Therefore, after the rubber material G is measured by the first weight measuring instrument 4, the first cooler 5 cools the rubber material G and thereby accelerates the shrinkage thereof. The first cooler 5 preferably has, for example, a function of cooling the rubber material G to 60 to 80°C, although the first cooler 5 is not limited thereto. For example, the first cooler 5 cools the rubber material G that is being transported by the first section 8a.

The second cooler 9 is, for example, provided with a larger number of watering heads 16 than that of the first cooler 5, and therefore, has, for example, a more powerful cooling function than that of the first cooler 5. In this embodiment, the second cooler 9 cools the rubber material G that is being transported by the second section 8b.

In this embodiment, the second weight measuring instrument 6 is located downstream of the first cooler 5 in the transport direction. Therefore, the second weight measuring instrument 6 can measure the rubber material G that has been cooled by the first cooler 5 and whose unit-length weight therefore no longer significantly changes.

The second weight measuring instrument 6 is, for example, located downstream of the inclined section 8c in the transport direction. Therefore, water adhering to the rubber material G after being poured by the first cooler 5 is caused by the inclined section 8c to flow away downwards, so that the second weight measuring instrument 6 can measure the unit-length weight of the rubber material G without including the weight of water. The second weight measuring instrument 6 is, for example, located between the inclined section 8c and the second section 8b.

Note that in order to allow the second weight measuring instrument 6 to measure the weight of the rubber material G more correctly, an air-sending device (not shown) having a well-known structure such as a blower or fan may be provided near the inclined section 8c. Such an air-sending device can blow water away from the rubber material G, i.e., can further remove water from the rubber material G.

As for the length of a path between the extruder 2 and the third weight measuring instrument 11, for example, if the second weight measuring instrument 6 is located closer to the third weight measuring instrument 11 than to the extruder 2, it takes a longer time to feed the result of measurement by the second weight measuring instrument 6 back to the receiving conveyor 3. This may lead to production of more defective rubber materials G. Therefore, in this embodiment, the second weight measuring instrument 6 is preferably located at a distance that is 15 to 35% of the length of the path between the extruder 2 and the third weight measuring instrument 11, downstream from the extruder 2 in the transport direction. Therefore, production of defective rubber materials G can be inhibited.

The cutter 10 can cut the transported rubber material G into a predetermined length. The cutter 10 of this embodiment cuts the rubber material G that has been cooled by the second cooler 9. In this embodiment, the cutter 10 is located above the cutting section 8d. The cutter 10 has, for example, a well-known structure that includes a blade 10a and a movement unit 10b that moves the blade 10a to a predetermined position. The cutter 10 cuts the rubber material G into a length of, for example, 2 to 3 m.

The third weight measuring instrument 11 measures, for example, the weight of a rubber material Ga obtained by cutting with the cutter 10. The third weight measuring instrument 11 of this embodiment measures the entire weight of each piece of the rubber material G that has been cut. Based on the result of the measurement by the third weight measuring instrument 11, it is determined whether the rubber material Ga passes or fails, e.g., whether or not the rubber material Ga qualifies for a tread rubber. The third weight measuring instrument 11 is preferably a belt conveyor type measuring instrument having a well-known structure.

For example, a plurality of rollers 12 that are arranged in the transport direction are provided upstream and downstream of the third weight measuring instrument 11 in the transport direction.

The controller 7 of this embodiment can control the transport speed of the receiving conveyor 3 based on electrical signals d outputted from the first and second weight measuring instruments 4 and 6. For example, if the unit-length weight of the rubber material G measured by the first or second weight measuring instrument 4 or 6 is larger than a predetermined value, the controller 7 can increase the transport speed of the receiving conveyor 3 to apply a tensile force to the rubber material G, thereby decreasing the unit-length weight of the rubber material G. Also, for example, if the unit-length weight of the rubber material G measured by the first or second weight measuring instrument 4 or 6 is smaller than the predetermined value, the controller 7 can decrease the transport speed of the receiving conveyor 3 to apply a compressive force to the rubber material G, thereby increasing the unit-length weight of the rubber material G. Therefore, the apparatus 1 of this embodiment can produce the rubber material G having a desired weight with higher accuracy.

The controller 7 may, for example, control the transport speed of the receiving conveyor 3 based on an electrical signal outputted from the third weight measuring instrument 11. The controller 7 may also adjust the extrusion speed of the extruder 2 based on the material and shape of the rubber material G. As the controller 7, for example, a programmable sequencer, a microcomputer, a personal computer, or other well-known control devices may be preferably used.

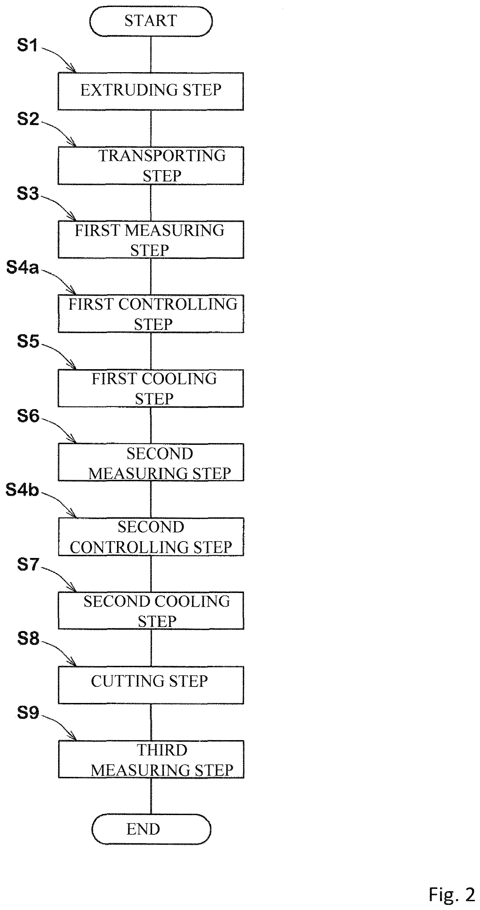

Next, a method for producing the rubber material G using the apparatus 1 thus configured will be described. FIG. 2 is a flowchart of the production method of this embodiment. As shown in FIG. 2, the production method of this embodiment includes an extruding step S1, a transporting step S2, a first measuring step S3, a controlling step, a first cooling step S5, and a second measuring step S6. Also, in this embodiment, the production method further includes a second cooling step S7, a cutting step S8, and a third measuring step S9. The controlling step of this embodiment includes a first controlling step S4a and a second controlling step S4b.

In the production method of this embodiment, initially, the extruding step S1 is performed. In the extruding step S1 of this embodiment, the extruder 2 continuously extrudes the rubber material G. The rubber material G has a temperature of, for example, 90 to 110°C immediately after being extruded from the extruder 2.

In this embodiment, the rubber material G extruded from the extruder 2 is in the shape of a single sheet continuously extending between the extrusion head 2b of the extruder 2 and the cutter 10. Note that the length of the rubber material G may be any suitable length that is larger than the predetermined length into which the rubber material G is to be cut by the cutter 10.

Next, the transporting step S2 is performed. In the transporting step S2 of this embodiment, the rubber material G extruded from the extruder 2 is received by the receiving conveyor 3, which in turn transports the rubber material G downstream in the transport direction. At this time, the transport speed of the receiving conveyor 3 is, for example, set based on a predetermined entire weight of one of the pieces into which the rubber material G is to be cut by the cutter 10. Such a transport speed of the receiving conveyor 3 is programmed in the controller 7.

In this embodiment, the transporting step S2 is continued at least until the weight of the sheet-shaped rubber material G extruded from the extruder 2 is measured by the third weight measuring instrument 11. For example, the transporting step S2 is continued while the rubber material G is being transported by the receiving conveyor 3 and the transport conveyor 8.

Next, the first measuring step S3 is performed. In the first measuring step S3 of this embodiment, the unit-length weight of the rubber material G being transported is measured. In the first measuring step S3, the unit-length weight of the rubber material G is measured by the first weight measuring instrument 4. The first weight measuring instrument 4 outputs, to the controller 7, an electrical signal d based on the measured unit-length weight of the rubber material G.

Next, the first controlling step S4a is performed. In the first controlling step S4a of this embodiment, the transport speed of the receiving conveyor 3 is controlled based on the result of the measurement in the first measuring step S3. This allows the rubber material G on the receiving conveyor 3 to have a desired unit-length weight. In the first controlling step S4a of this embodiment, the controller 7 controls the transport speed of the receiving conveyor 3.

Next, the first cooling step S5 is performed. In the first cooling step S5, for example, the rubber material G that has been measured in the first measuring step S3 is cooled by the first cooler 5. In the first cooling step S5 of this embodiment, the watering heads 16 of the first cooler 5 pour water onto the rubber material G that is being transported by the first section 8a such that the rubber material G is cooled to, for example, 60 to 80°C. As a result, the unit-length weight of the rubber material G that is located downstream of the first cooler 5 in the transport direction no longer significantly changes.

Next, the second measuring step S6 is performed. In the second measuring step S6, for example, the unit-length weight of the rubber material G that has been cooled in the first cooling step S5 is measured. In the second measuring step S6, the rubber material G that has passed through the inclined section 8c is measured by the second weight measuring instrument 6. The second weight measuring instrument 6 outputs, to the controller 7, an electrical signal d based on the measured unit-length weight of the rubber material G.

Next, the second controlling step S4b is performed. In the second controlling step S4b of this embodiment, the transport speed of the receiving conveyor 3 is controlled based on the unit-length weight of the rubber material G that has been measured in the second measuring step S6. Thus, in the second controlling step S4b, the transport speed of the receiving conveyor 3 is controlled based on the unit-length weight of the rubber material G that has been cooled by the first cooler 5 and whose shrinkage therefore has been accelerated, and therefore, the rubber material G being transported by the receiving conveyor 3 can be caused to have a desired unit-length weight. In the second controlling step S4b of this embodiment, the controller 7 controls the transport speed of the receiving conveyor 3.

Next, the second cooling step S7 is performed. In the second cooling step S7 of this embodiment, the rubber material G that has been measured in the second measuring step S6 is cooled by the second cooler 9. In the second cooling step S7, for example, the rubber material G that is being transported by the second section 8b of the transport conveyor 8 is cooled. The rubber material G that has been cooled in the second cooling step S7 has, for example, a desired temperature for a tire constituent member for forming a green tire.

Next, the cutting step S8 is performed. In the cutting step S8 of this embodiment, the rubber material G is cut into a predetermined length by the cutter 10. Thus, the rubber material G having a desired length is formed as the tire constituent member.

Next, the third measuring step S9 is performed. In the third measuring step S9 of this embodiment, the entire weight of the rubber material G that has been cut in the cutting step S8 is measured. In the production method of this embodiment, the transport speed of the receiving conveyor 3 is controlled based on the unit-length weight of the rubber material G that has shrunk in the first cooling step S5, and therefore, the entire weight of the rubber material G can be caused to be a desired weight with higher accuracy.

Although particularly preferable embodiments of the present invention have been described above in detail, the present invention is not limited to the illustrated embodiments, and various modifications can be made to implement the present invention.

### EXAMPLES

To verify the advantageous effects of the present invention, sheet-shaped rubber materials were produced using the production apparatus shown in FIG. 1. The rubber materials were tested for weight accuracy. Specifications common to the rubber materials and test methods are as described below.

### <Weight Accuracy Test 1>

Rubber materials were produced using production apparatuses of an example and a comparative example. The weights of the rubber materials were measured using the third weight measuring instrument, and the percentage of rubber materials deviating from the following target weight was calculated. The results are indicated by real numbers. A smaller value indicates a better result. Note that the production apparatus of the comparative example is the same as the production apparatus of FIG. 1, except that the former does not include the second weight measuring instrument. The test results are shown in Table 1.
Rubber material: a tread rubber for a pneumatic tire having a tire size of 165/65R14
Number of rubber materials produced: 10,000
Target weight of rubber material: 2,129±60 g

**Table 1**

| | Comparative Example 1 | Example 1 |
|---|---|---|
| Percentage of rubber materials deviating from target value (%) [A smaller value indicates a better result] | 0.55 | 0.37 |

### <Weight Accuracy Test 2>

Rubber materials were produced using production methods of examples and a comparative example. The weights of the rubber materials were measured using the third weight measuring instrument, and variations in the weight were calculated. A production method of the comparative example is the same as that of the examples, except that the first cooling step is not performed in the former method. The results are indicated by the average of deviations from the target weight. A smaller value indicates a better result.
Rubber material: a tread rubber for a pneumatic tire having a tire size of 165/65R14
Temperature of rubber material immediately after extruder: 100°C
Target weight of rubber material: 2,129 g
Number of rubber materials produced: 30

The test results are shown in Table 2.

**Table 2**

| | Comparative Example 2 | Example 2 | Example 3 | Example 4 | Example 5 |
|---|---|---|---|---|---|
| Temperature of rubber material after first cooling step (°C) | 100 | 80 | 70 | 60 | 50 |
| Variations of rubber materials (g) [A smaller value indicates a better result] | 8.6 | 8.1 | 7.8 | 4.9 | 5.1 |

The test results demonstrate that the production apparatus and production method of the examples allow a rubber material to be produced with higher accuracy compared to the production apparatus and production method of the comparative examples.

## Claims

1. A production apparatus (1) for producing an unvulcanized sheet-shaped rubber material (G), comprising:
an extruder (2) configured to continuously extrude the rubber material (G);
a receiving conveyor (3) configured to receive the rubber material (G) extruded from the extruder (2) and transport the rubber material (G) downstream in a transport direction, and having an adjustable transport speed;
a first weight measuring instrument (4) located downstream of the extruder (2) in the transport direction and configured to measure a weight per unit length of the rubber material (G) being transported;
a first cooler (5) configured to cool the rubber material (G) that has been measured by the first weight measuring instrument (4);
a second weight measuring instrument (6) configured to measure the weight per unit length of the rubber material (G) that has been cooled by the first cooler (5); and
a controller (7) configured to control the transport speed of the receiving conveyor (3) based on the weights per unit length of the rubber material (G) that have been measured by the first weight measuring instrument (4) and the second weight measuring instrument (6), **characterized by**
a second cooler (9) configured to cool the rubber material (G) that has been measured by the second weight measuring instrument (6).

2. The production apparatus (1) according to claim 1, wherein the first cooler (5) cools the rubber material (G) to a temperature of 60 to 80°C.

3. The production apparatus (1) according to claim 1 or 2, wherein the first cooler (5) cools the rubber material (G) by pouring a liquid onto the rubber material (G).

4. The production apparatus (1) according to claim 3, wherein the liquid is water.

5. The production apparatus (1) according to any one of claims 1 to 4, further comprising a transport conveyor (8) configured to transport the rubber material (G) that has been cooled by the first cooler (5) downstream in the transport direction, wherein
the transport conveyor (8) includes an inclined section (8c) upwardly inclined downstream in the transport direction, and
the second weight measuring instrument (6) is located downstream of the inclined section (8c) in the transport direction.

6. The production apparatus (1) according to any one of claims 1 to 5, further comprising a cutter (10) configured to cut the rubber material (G) that has been cooled by the second cooler (9) into a predetermined length.

7. The production apparatus (1) according to claim 6, further comprising a third weight measuring instrument (11) configured to measure a weight of the rubber material (G) that has been cut by the cutter (10).

8. The production apparatus (1) according to claim 7, wherein the second weight measuring instrument (6) is located at a distance that is 15 to 35% of the length of a path between the extruder (2) and the third weight measuring instrument (11), downstream from the extruder (2) in the transport direction.

9. A production method for producing an unvulcanized sheet-shaped rubber material (G), comprising:
a step (S1) of continuously extruding the rubber material (G) from an extruder (2);
a step (S2) of receiving the rubber material (G) extruded from the extruder (2) and transporting the rubber material (G) downstream in a transport direction, by using a receiving conveyor (3);
a first measuring step (S3) of measuring a weight per unit length of the rubber material (G) being transported by the receiving conveyor (3);
a first cooling step (S5) of cooling the rubber material (G) that has been measured in the first measuring step (S3);
a second measuring step (S6) of measuring the weight per unit length of the rubber material (G) that has been cooled in the cooling step (S5); and
a step (S4a, S4b) of controlling a transport speed of the receiving conveyor (3) based on the weights per unit length of the rubber material (G) that have been measured in the first measuring step (S3) and the second measuring step (S6),
**characterized by**
a second cooling step (S7) of cooling the rubber material (G) that has been measured in the second measuring step (S6).

## Patentansprüche

1. Herstellungsvorrichtung (1) zum Herstellen eines unvulkanisierten blattförmigen Gummimaterials (G), umfassend:
einen Extruder (2), der ausgebildet ist, das Gummimaterial (G) kontinuierlich zu extrudieren;
eine Aufnahme-Fördereinrichtung (3), welche ausgebildet ist, das von dem Extruder (2) extrudierte Gummimaterial (G) aufzunehmen und das Gummimaterial (G) in einer Transportrichtung stromabwärts zu transportieren, und welche eine einstellbare Transportgeschwindigkeit aufweist;
ein erstes Gewichtsmessinstrument (4), das in der Transportrichtung stromabwärts des Extruders (2) angeordnet ist und ausgebildet ist, ein Gewicht pro Längeneinheit des transportierten Gummimaterials (G) zu messen;
einen ersten Kühler (5), der ausgebildet ist, das Gummimaterial (G) zu kühlen, das mittels des ersten Gewichtsmessinstruments (4) gemessen wurde;
ein zweites Gewichtsmessinstrument (6), das ausgebildet ist, das Gewicht pro Längeneinheit des Gummimaterials (G) zu messen, das mittels des Kühlers (5) gekühlt wurde; und
einen Controller (7), der ausgebildet ist, die Transportgeschwindigkeit der Aufnahme-Fördereinrichtung (3) basierend auf den Gewichten pro Längeneinheit des Gummimaterials (G) zu steuern, die mittels des ersten Gewichtsmessinstruments (4) und des zweiten Gewichtsmessinstruments (6) gemessen wurden,
**gekennzeichnet durch**
einen zweiten Kühler (9), der ausgebildet ist, das Gummimaterial (G) zu kühlen, das mittels des zweiten Gewichtsmessinstruments (6) gemessen wurde.

2. Herstellungsvorrichtung (1) nach Anspruch 1, wobei der erste Kühler (5) das Gummimaterial (G) auf eine Temperatur von 60 bis 80°C kühlt.

3. Herstellungsvorrichtung (1) nach Anspruch 1 oder 2, wobei der erste Kühler (5) das Gummimaterial (G) durch Gießen einer Flüssigkeit auf das Gummimaterial (G) kühlt.

4. Herstellungsvorrichtung (1) nach Anspruch 3, wobei die Flüssigkeit Wasser ist.

5. Herstellungsvorrichtung (1) nach einem der Ansprüche 1 bis 4, ferner eine Transport-Fördereinrichtung (8) umfassend, die ausgebildet ist, das Gummimaterial (G), das mittels des ersten Kühlers (5) gekühlt wurde, in der Transportrichtung stromabwärts zu transportieren, wobei
die Transport-Fördereinrichtung (8) einen geneigten Abschnitt (8c) umfasst, der stromabwärts in der Transportrichtung aufwärts geneigt ist, und
das zweite Gewichtsmessinstrument (6) in der Transportrichtung stromabwärts des geneigten Abschnitts (8c) angeordnet ist.

6. Herstellungsvorrichtung (1) nach einem der Ansprüche 1 bis 5, ferner eine Schneideinrichtung (10) umfassend, die ausgebildet ist, das Gummimaterial (G), das mittels des zweiten Kühlers (9) gekühlt wurde, in eine vorbestimmte Länge zu schneiden.

7. Herstellungsvorrichtung (1) nach Anspruch 6, ferner ein drittes Gewichtsmessinstrument (11) umfassend, das ausgebildet ist, ein Gewicht des Gummimaterials (G) zu messen, das mittels der Schneideinrichtung (10) geschnitten wurde.

8. Herstellungsvorrichtung (1) nach Anspruch 7, wobei das zweite Gewichtsmessinstrument (6) bei einer Distanz, die 15 bis 35% der Länge eines Weges zwischen dem Extruder (2) und dem dritten Gewichtsmessinstrument (11) beträgt, in der Transportrichtung stromabwärts des Extruders (2) angeordnet ist.

9. Herstellungsverfahren zum Herstellen eines unvulkanisierten blattförmigen Gummimaterials (G), umfassend:
einen Schritt (S1) des kontinuierlichen Extrudierens des Gummimaterials (G) mittels eines Extruders (2);
einen Schritt (S2) des Aufnehmens des Gummimaterials (G), das mittels des Extruders (2) extrudiert wurde, und des Transportierens des Gummimaterials (G) stromabwärts in einer Transportrichtung unter Verwendung einer Aufnahme-Fördereinrichtung (3);
einen ersten Messschritt (S3) des Messens eines Gewichts pro Längeneinheit des Gummimaterials (G), das mittels der Aufnahme-Fördereinrichtung (3) transportiert wird;
einen ersten Kühlungsschritt (S5) des Kühlens des Gummimaterials (G), das in dem ersten Messschritt (S3) gemessen wurde;
einen zweiten Messschritt (S6) des Messens des Gewichts pro Längeneinheit des Gummimaterials (G), das in dem Kühlungsschritt (S5) gekühlt wurde; und
einen Schritt (S4a, S4b) des Steuerns einer Transportgeschwindigkeit der Aufnahme-Fördereinrichtung (3) basierend auf den Gewichten pro Längeneinheit des Gummimaterials (G), die in dem ersten Messschritt (S3) und in dem zweiten Messschritt (S6) gemessen wurden,
**gekennzeichnet durch**
einen zweiten Kühlungsschritt (S7) des Kühlens des Gummimaterials (G), das in dem zweiten Messschritt (S6) gemessen wurde.

## Revendications

1. Appareil de production (1) destiné à produire un matériau de caoutchouc en forme de feuille non vulcanisé (G), comprenant :
une extrudeuse (2) configurée pour extruder en continu le matériau de caoutchouc (G) ;
un convoyeur de réception (3) configuré pour recevoir le matériau de caoutchouc (G) extrudé depuis l'extrudeuse (2) et pour transporter le matériau de caoutchouc (G) en aval dans une direction de transport, et qui a une vitesse de transport ajustable ;
un premier instrument de mesurage de poids (4) situé en aval de l'extrudeuse (2) dans la direction de transport, et configuré pour mesurer un poids par longueur unitaire du matériau de caoutchouc (G) qui est transporté ;
un premier refroidisseur (5) configuré pour refroidir le matériau de caoutchouc (G) qui a été mesuré par le premier instrument de mesurage de poids (4) ;
un deuxième instrument de mesurage de poids (6) configuré pour mesurer le poids par longueur unitaire du matériau de caoutchouc (G) qui a été refroidi par le premier refroidisseur (5) ; et
un contrôleur (7) configuré pour commander la vitesse de transport du convoyeur de réception (3) sur la base des poids par longueur unitaire du matériau de caoutchouc (G) qui ont été mesurés par le premier instrument de mesurage de poids (4) et par le deuxième instrument de mesurage de poids (6),
**caractérisé par**
un second refroidisseur (9) configuré pour refroidir le matériau de caoutchouc (G) qui a été mesuré par le deuxième instrument de mesurage de poids (6).

2. Appareil de production (1) selon la revendication 1, dans lequel le premier refroidisseur (5) refroidit le matériau de caoutchouc (G) jusqu'à une température de 60 à 80 °C.

3. Appareil de production (1) selon la revendication 1 ou 2, dans lequel le premier refroidisseur (5) refroidit le matériau de caoutchouc (G) en versant un liquide jusque sur le matériau de caoutchouc (G).

4. Appareil de production (1) selon la revendication 3, dans lequel le liquide est de l'eau.

5. Appareil de production (1) selon l'une quelconque des revendications 1 à 4, comprenant en outre un convoyeur de transport (8) configuré pour transporter le matériau de caoutchouc (G) qui a été refroidi par le premier refroidisseur (5) en aval dans la direction de transport, dans lequel
le convoyeur de transport (8) inclut une section inclinée (8c) inclinée vers le haut en aval dans la direction de transport, et
le deuxième instrument de mesurage de poids (6) est situé en aval de la section inclinée (8c) dans la direction de transport.

6. Appareil de production (1) selon l'une quelconque des revendications 1 à 5, comprenant en outre un moyen de coupe (10) configuré pour couper le matériau de caoutchouc (G) qui a été refroidi par le second refroidisseur (9) en une longueur prédéterminée.

7. Appareil de production (1) selon la revendication 6, comprenant en outre un troisième instrument de mesurage de poids (11) configuré pour mesurer un poids du matériau de caoutchouc (G) qui a été coupé par le moyen de coupe (10).

8. Appareil de production (1) selon la revendication 7, dans lequel le deuxième instrument de mesurage de poids (6) est situé à une distance qui est de 15 à 35 % de la longueur d'un chemin entre l'extrudeuse (2) et le troisième instrument de mesurage de poids (11), en aval de l'extrudeuse (2) dans la direction de transport.

9. Procédé de production pour produire un matériau de caoutchouc en forme de feuille non vulcanisé (G), comprenant :
une étape (S1) consistant à extruder en continu le matériau de caoutchouc (G) à partir d'une extrudeuse (2) ;
une étape (S2) consistant à recevoir le matériau de caoutchouc (G) extrudé depuis l'extrudeuse (2) et à transporter le matériau de caoutchouc (G) en aval dans une direction de transport, en utilisant un convoyeur de réception (3) ;
une première étape de mesurage (S3) consistant à mesurer un poids par longueur unitaire du matériau de caoutchouc (G) qui est transporté par le convoyeur de réception (3) ;
une première étape de refroidissement (S5) consistant à refroidir le matériau de caoutchouc (G) qui a été mesuré dans la première étape de mesurage (S3) ;
une seconde étape de mesurage (S6) consistant à mesurer le poids par longueur unitaire du matériau de caoutchouc (G) qui a été refroidi dans l'étape de refroidissement (S5) ; et
une étape (S4a, S4b) consistant à commander une vitesse de transport du convoyeur de réception (3) sur la base des poids par longueur unitaire du matériau de caoutchouc (G) qui ont été mesurés dans la première étape de mesurage (S3) et dans la seconde étape de mesurage (S6),
**caractérisé par**
un seconde étape de refroidissement (S7) consistant à refroidir le matériau de caoutchouc (G) qui a été mesuré dans la seconde étape de mesurage (S6).
